# EUROPEAN PATENT SPECIFICATION

(11) **EP 2 431 246 B1**
(45) Date of publication and mention of the grant of the patent: **02.05.2018**
(21) Application number: 10464008.1
(22) Date of filing: 08.11.2010
(51) Int. Cl.: B61C 17/04, B61C 9/24, B61C 5/02

(54) **DIESEL-ELECTRICAL LOCOMOTIVE WITH AC-AC POWER TRANSMISSION SYSTEM**
DIESEL-ELEKTRISCHE LOKOMOTIVE MIT WECHSELSTROM-WECHSELSTROM-ÜBERTRAGUNGSSYSTEM
LOCOMOTIVE DIESEL/ÉLECTRIQUE DOTÉ D'UN SYSTÈME DE TRANSMISSION DE LA PUISSANCE CA-CA

(30) Priority: 20.09.2010 RO 201000867
(43) Date of publication of application: 21.03.2012
(73) Proprietor: S.C. Promat S.R.L., 200092 Judet Dolj (RO)
(72) Inventor: Matusa, Remus George, Craiova, jud. Dolj (RO); Matusa, Tudor, 200341 Dolj (RO); Matusa, T. Tudor, 200432 Dolj (RO)
(74) Representative: TBK

(56) References cited:
- US-A- 2 666 497
- US-A- 5 306 972
- US-A- 5 480 220
- US-A1- 2002 177 929
- US-A1- 2006 091 832

## Description

The invention relates to a Diesel-electrical locomotive with AC-AC power transmission system and computer control obtained by the modernization of 2100 HP Diesel-electrical locomotive with DC-DC power transmission system. Nowadays, there are used Diesel-electrical locomotives with DC-DC power transmission system that present the following disadvantages: the electrical energy is produced by a direct current generator with great mass and gauge collector, there are used direct current series excitation motors with collector, the sliding phenomena is difficult to control due to the use of direct current series excitation motors with collector, arranged in series, having a low proportion power/mass, the direct current electrical machines of auxiliary services present the well-known disadvantages, the mechanic works in difficult conditions (noise, climate, ergonomic aspects), and there is used stranded logic for control.

There are also known Diesel-electrical locomotives with AC-AC power transmission system that present the disadvantage of being equipped with only one traction inverter for the supply of all traction motors, solution that doesn't allow the exploitation of different diameters wheels, resulted as a effect of different depreciations.

Document US 2002/177929 A1 discloses a hybrid energy power management system and method applied also for locomotives. An example for a diesel-electric locomotive is described, in which an engine drives an alternator/rectifier, by which a DC power is supplied. The DC power is provided to an inverter, by which an AC traction motor is driven.

Document US 2006/091832 A1 discloses a multi-engine locomotive, wherein a plurality of AC traction motors and inverters are provided, which are connected to a DC bus. The DC power is obtained by a converter for converting mechanical energy to DC power, i.e., for example a generator and a rectifier. Document US 5 306 972 A relates to an alternating current (AC) motor and drive systems for electric traction motor vehicles, in particular with reference to the squirrel cage induction motor which is generally known to be more rugged than an equivalent direct current (DC) motor.

Document US 5 480 220 A discloses a method of inhibiting wheel slip in an electric induction motor powered vehicle such as a locomotive, wherein the AC power is electrically coupled in energizing relationship to each of a plurality of adjustable speed traction motors M1 to M4. Although normally two such motors are coupled to one inverter, in some instances it may be desirable to provide an inverter for each motor or to couple additional motors to a single inverter.

The technical problem that the invention proposes to solve consists of the AC-AC power transmission system and computer control obtained by modernization of 2100 HP Diesel-electrical locomotive with DC-DC power transmission system.

This object is solved by a diesel-electrical locomotive as set out in claim 1.

Advantageous developments are defined in the dependent claims.

The proposed technical solution eliminates the above-mentioned disadvantages by providing the supply of every asynchronous traction motor through an individual traction inverter controlled to use wheels of different diameters within the admitted limits and also by reusing the existing DC motors cases, the bogies, the decelerators and the ventilation system structure of traction electric motors.

The Diesel-electrical locomotive with AC-AC power transmission system and computer control, according to the invention, is composed of a Diesel group that drives a synchronous generator and is coupled with a rectifier from which the asynchronous traction motors with squirrel-cage rotors are supplied through a traction inverter. The cooling assembly of static converters and traction motors for the first bogie is composed of a blower set, a static converters modules block for supply of traction motors, pressure equalization chamber and ventilation piping for traction motors. The cooling air flow, generated by the ventilation assembly is directed by a deflector through the radiators blades of the electronic modules to the pressure equalization chamber, and through the ventilation piping is directed to the traction motors.

The circuit scheme of force and auxiliary services is composed of a synchronous generator driven by a Diesel engine. The voltage supplied by the synchronous generator is rectified by a three-phase rectifier and applied to the traction inverters, to the braking chopper and to the step-down chopper for supply of auxiliary services.

The load of each traction inverter is formed of one asynchronous electric traction motor for each traction inverter, provided with a block for measuring speed and temperatures of windings and bearings.

The control of the Diesel engine is provided by a computer based on the information taken from a control and driving system. The voltage adjustment of the synchronous generator is set up by a voltage regulator based on the information taken from the control and driving system

According to the invention, the locomotive presents the following advantages:
- It can be equipped with different diameters wheels within the admitted limits, on a larger scale than the existing solutions;
- It allows the optimal control of the adherence limit, obtaining the growth of the traction force;
- It can function with one to five isolated traction motors;
- It can function at maximal power in case of isolation of one or two traction motors, due to the new traction motors characteristics;
- In case of locomotive modernization, the prime cost is reduced by reusing the cases of the existing DC traction motors, the bogie, the decelerator and the ventilation system structure of the traction electric motors;
- The traction power grows by the growth of the traction electric engines power using the same gauge as for the existing solutions;
- It uses the same ventilation system for cooling the static converters and the electrical traction motors;
- The auxiliary services are supplied in alternative current and there are used electrical motors for general use;
- For control and monitoring there are used microcontrollers and DSP systems and driving and control complex algorithms.

An example of embodiment is presented in the following figures:

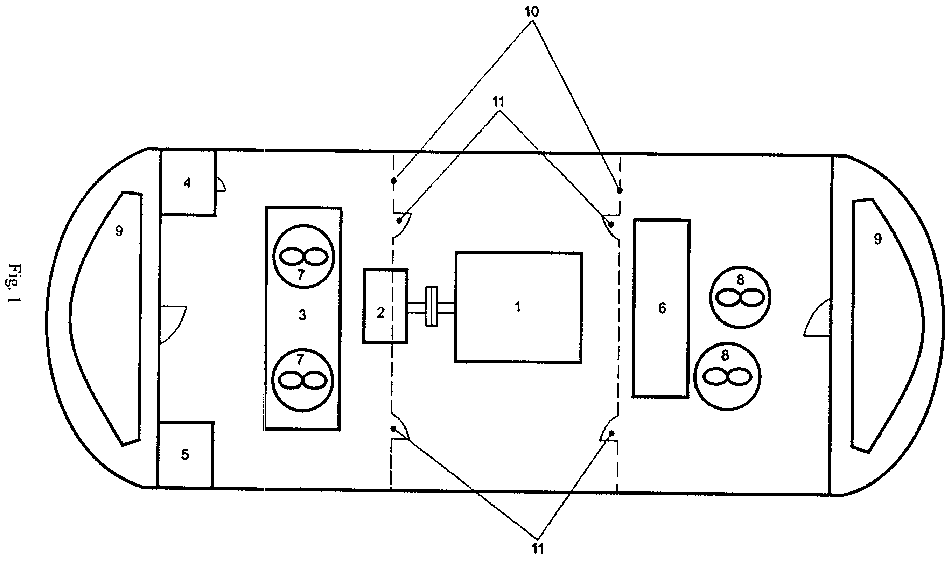

- Figure no.1 presents the scheme of the locomotive equipments layout;

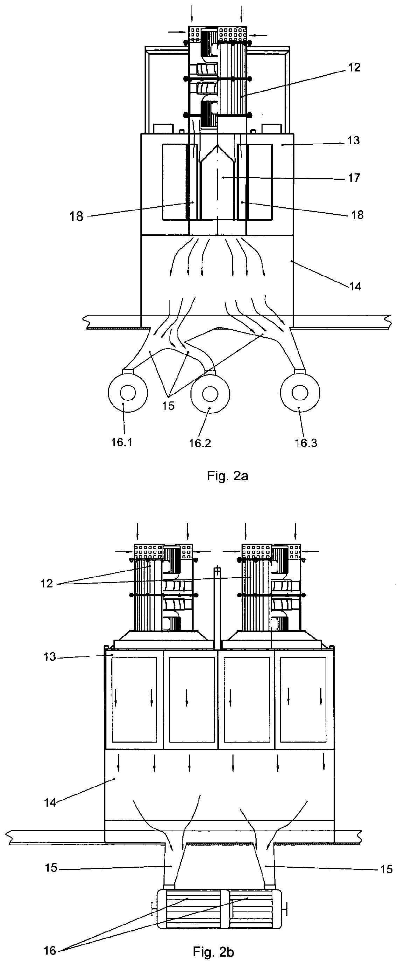

- Figure no 2 presents the ventilation system schematic diagram;

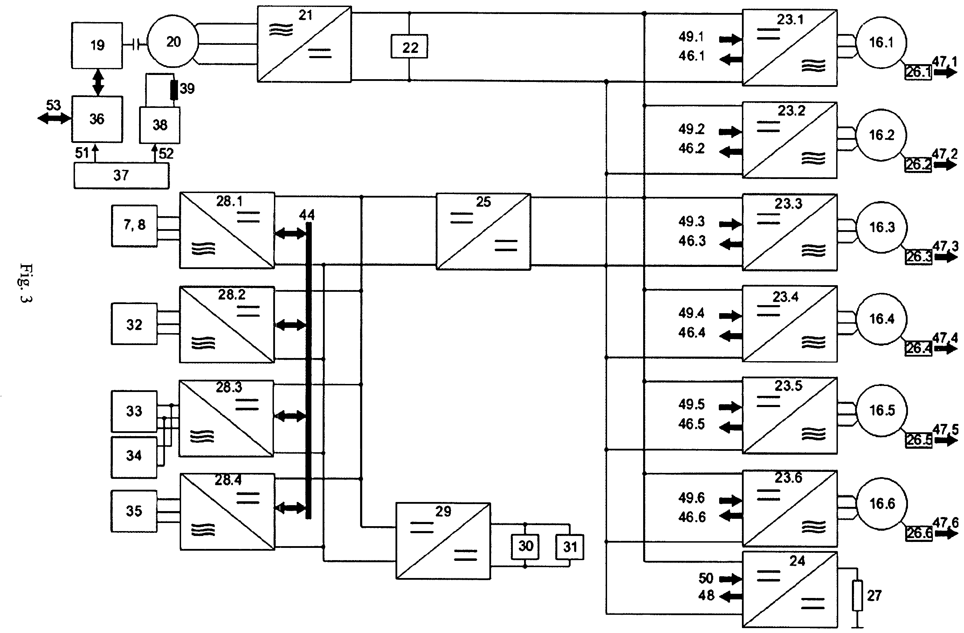

- Figure no.3 presents the electrical scheme of force and auxiliary services;

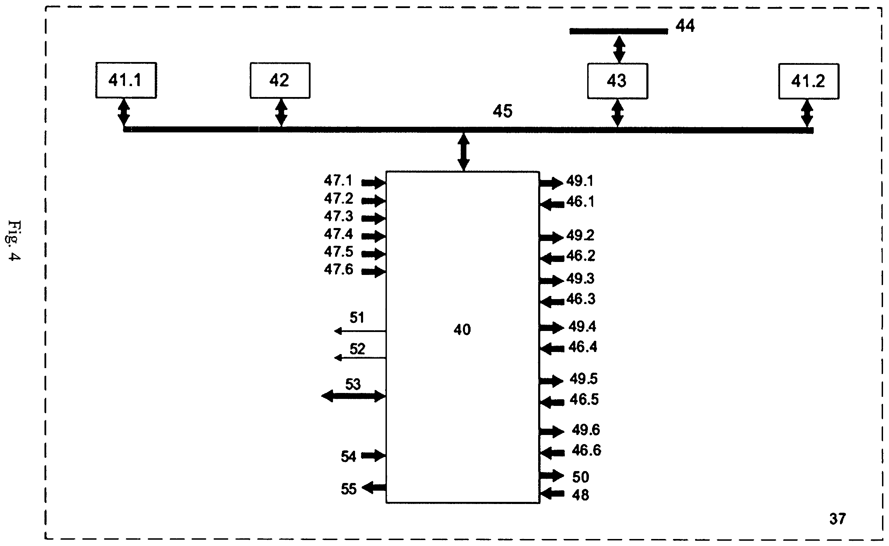

- Figure no.4 presents the control and driving system block scheme.

The Diesel-electrical locomotive with AC- AC power transmission system is composed of a Diesel group **1,** a synchronous generator **2,** a traction convertor block **3,** an auxiliary services apparatus block **4,** a braking resistances block **5,** a pneumatic installation block **6,** a cooling assembly **7** of traction converters and traction motors for one bogie, a cooling assembly **8** of traction motors for the second bogie, a driving and control computerized desk **9,** separating walls for the Diesel engine compartment **10** with access doors **11.**

The cooling assembly of static converters and traction motors for the first bogie **7** is composed of a blower set **12,** static converters modules block for the supply of traction motors **13,** pressure equalization chamber **14** and ventilation piping **15** for traction motors **16.** The air flow for cooling, generated by the ventilation assembly **12** is directed by the deflector **17** through the radiators blades **18** of the electronic modules to the pressure equalization chamber **14,** and through the ventilation piping **15** is directed towards the traction motors **16.**

The electrical scheme of force and auxiliary services is composed of the Diesel engine **19** that drives the synchronous generator **20,** and the provided voltage by it is rectified by the rectifier **21,** measured by the voltage transducer **22** and applied to the traction inverters **23.1, ..., 23.6,** to the braking chopper and to the step-down chopper **25** for the supply of the auxiliary services.

The load of each traction inverter is composed of an asynchronous electric traction motor **16.1, ..., 16.6** each being provided with a block for measuring speed and windings and bearings temperatures **26.1, ..., 26.6.**

The load of the braking chopper **24** is composed of the braking resistances **27** mounted in block **5.**

The load of the step-down chopper **25** is composed of four three-phase inverters **28.1, ..., 28.4,** the DC-DC converter **29** for charging the storage battery **30** and for supplying the direct current consumers **31.**

The inverter **28.1** supply the cooling ventilators motors mounted inside the cooling assemblies **7** and **8.** The inverter **28.2** supplies the traction motor that drives the compressor **32.** The inverter **28.3** provides the supply of the ventilation system **33** inside the block of apparatus **4,** respectively the 220V AC source **34.** The inverter **28.4** provides the supply of the ventilator's motor **35** for cooling of the braking resistances **27** placed in block **5.**

The control of the Diesel engine **19** is provided by the computer of the Diesel engine **36** based on the information **51** taken from the control and driving system **37.** The adjustment of the synchronous generator voltage **20** is provided by the voltage rectifier **38** that supplies the operating winding **39** based on the information **52** taken from the control and driving system **37.**

The control and driving system **37** is composed of a computer unit **40,** two display devices with touch screens **41.1, 41.2** disposed inside the two driving posts of the locomotive, a GPS-GPRS module **42,** a communication gate **43** that provides the informational interface with the train communication bus **44,** and a communication bus **45.** The computer unit **40** takes the information **46.1,** ..., **46.6** from the traction inverters **23.1, ..., 23.6, 47.1,** ..., **47.6** from blocks for measuring speeds and temperatures **26.1,..., 26.6, 48** from the braking chopper **24,** generates the commands **49.1,** ..., **49.6** transmitted to the inverters **23.1,** ...., **23.6** and the commands **50, 51** and **52** transmitted to the braking chopper **24,** to the Diesel engine computer **36,** respectively to the voltage rectifier **38.** The control unit **40** takes the functioning parameters from the Diesel engine computer **36** through a data bus **53** and transmits them to the displaying units **41.1, ..., 41.2** of the two driving posts and to the GPS-GPRS system **42** through the communication bus **45.**

The control unit **40** takes also other digital and analogical signals **54** from locomotive and on their basis will synthesize the commands **55.**

## Claims

1. A Diesel-electrical locomotive with AC-AC power transmission system and computer control, wherein the Diesel-electrical locomotive is a 2100 HP Diesel-electrical locomotive comprising alternative current traction motors being asynchronous electrical motors (16.1, ...., 16.6) for traction,
wherein the asynchronous electrical motors are provided with squirrel-cage rotors (16.1..16.6), each asynchronous electrical motor being supplied through one traction inverter (23.1, ..., 23.6) controlled to use wheels of different diameters within the admitted limits.

2. The Diesel-electrical locomotive as claimed in claim 1, wherein the asynchronous electrical motors (16.1, ..., 16.6) are configured such that they comprise the same gauge shape and sizes as the direct current motors that equip the 2100 HP Diesel-electrical locomotive with DC-DC power transmission system.

3. The Diesel-electrical locomotive as claimed in claim 1 or 2, further comprising a cooling assembly (7) wheretrough the traction motors cooling system is common with the static converters cooling system, the air flow for cooling, generated by a ventilation assembly (12), directed by a deflector (17) through radiators blades (18) mounted on electronic modules towards a pressure equalization chamber (14), and through a ventilation piping (15) being directed towards the asynchronous electrical motors (16.1, ..., 16.6).

4. The Diesel-electrical locomotive as claimed in any of claims 1, 2 or 3, further comprising a control and driving system (37) composed of a control unit (40), two display devices with touch screens (41.1, 41.2) disposed inside of the two driving posts of the locomotive, a GPS-GPRS module (42), a communication gate (43) with a train bus (44) and a communication bus (45), takes information (46.1 ,..., 46.6) from the traction inverters (23.1, ..., 23.6), takes information (47.1, ..., 47.6) from block for measuring speeds and temperatures (26.1, ..., 26.6), takes signals (48) from a braking chopper (24), generates commands (49.1, ..., 49.6) transmitted to the traction inverters (23.1, ..., 23.6) and commands (50, 51 and 52) transmitted to the braking chopper (24), a Diesel engine computer (36) and a voltage rectifier (38).

## Patentansprüche

1. Dieselelektrische Lokomotive mit einem Wechselstrom-Leistungsübertragungssystem und einer Computersteuerung, wobei die dieselelektrische Lokomotive eine dieselelektrische 2100-HP-Lokomotive ist, die Wechselstromfahrmotoren aufweist, die asynchrone Elektromotoren (16.1, ..., 16.6) zum Fahren sind,
wobei die asynchrone Elektromotoren mit Käfigläufern (16.1...16.6) versehen ist, wobei jeder asynchrone Elektromotor durch einen Fahrwechselrichter (23.1, ..., 23.6) versorgt wird, die gesteuert werden, Räder unterschiedlicher Durchmesser innerhalb zugelassener Grenzen zu verwenden.

2. Dieselelektrische Lokomotive nach Anspruch 1, wobei die asynchronen Elektromotoren (16.1, ..., 16.6) derart konfiguriert sind, dass sie dieselben Abmessungsform und Größen wie die Gleichstrommotoren aufweisen, mit der die dieselelektrische 2100-HP-Lokomotive mit dem Gleichstrom-Gleichstrom-Leistungsübertragungssystem ausstattet ist.

3. Dieselelektrische Lokomotive nach Anspruch 1 oder 2, weiterhin mit einer Kühlanordnung (7), durch die das Fahrmotorenkühlsystem gemeinsam mit dem statischen Umwandlersystem ist, wobei die Luftströmung zum Kühlen, die durch eine Ventilationsanordnung (12) erzeugt wird, durch eine Ablenkeinrichtung (17) durch Kühlerflügel (18), die an Elektronikmodulen montiert sind, zu einer Druckausgleichskammer (14) gerichtet wird, und durch eine Ventilationsverrohrung (15) zu den asynchronen Elektromotoren (16.1, ..., 16.6) gerichtet wird.

4. Dieselelektrische Lokomotive nach einem der Ansprüche 1, 2 oder 3, weiterhin mit einem Steuerungs- und Antriebssystem (37), das aus einer Steuerungseinheit (40), zwei Anzeigevorrichtungen mit Touch-Screens (41.1, 41.2), die innerhalb der zwei Führerstände der Lokomotive angeordnet sind, einem GPS-GPRS-Modul (42), einem Kommunikationsportal (43) mit einem Zugbus (44) und einem Kommunikationsbus (45) zusammengesetzt ist, Informationen (46.1, ..., 46.6) aus den Fahrwechselrichtern (23.1, ..., 23.6) entnimmt, Informationen (47.1, ..., 47.6) aus einem Block zum Messen von Geschwindigkeiten und Temperaturen (26.1, ..., 26.6) entnimmt, Signale (48) aus einem Brems-Chopper (24) entnimmt, Befehle (49.1,... ,49.6), die zu den Fahrwechselrichtern (23.1, ..., 23.6) gesendet werden, und Befehle (50, 51 und 52) erzeugt, die zu dem Brems-Chopper (24), einem Dieselmaschinen-Computer (36) und einem Spannungsgleichrichter (38) gesendet werden.

## Revendications

1. Locomotive diesel-électrique avec système de transmission d'énergie courant alternatif-courant alternatif et commande par ordinateur, la locomotive diesel-électrique étant une locomotive diesel-électrique de 2100 CV comprenant des moteurs de traction à courant alternatif qui sont des moteurs électriques asynchrones (16.1, ..., 16.6) pour la traction,
dans laquelle les moteurs électriques asynchrones sont munis de rotors à cage d'écureuil (16.1, ..., 16.6), chaque moteur électrique asynchrone étant alimenté par l'intermédiaire d'un onduleur de traction (23.1, ..., 23.6) commandé de façon à utiliser des roues de diamètres différents à l'intérieur des limites admises.

2. Locomotive diesel-électrique selon la revendication 1, dans laquelle les moteurs électriques asynchrones (16.1, ..., 16.6) sont configurés de telle sorte qu'ils comprennent des tailles et une forme de gabarit identiques à celles des moteurs à courant continu qui équipent la locomotive diesel-électrique de 2100 CV avec un système de transmission d'énergie courant continu-courant continu.

3. Locomotive diesel-électrique selon la revendication 1 ou 2, comprenant de plus un ensemble de refroidissement (7) grâce auquel le système de refroidissement des moteurs de traction est commun au système de refroidissement des convertisseurs statiques, l'écoulement d'air pour le refroidissement, généré par un ensemble de ventilation (12), étant dirigé par un déflecteur (17) à travers des lames de radiateurs (18) montées sur des modules électroniques vers une chambre d'égalisation de pression (14), et étant dirigé par l'intermédiaire d'une tubulure de ventilation (15) vers les moteurs électriques asynchrones (16.1, ..., 16.6).

4. Locomotive diesel-électrique selon l'une quelconque des revendications 1, 2 ou 3, comprenant de plus un système de commande et de conduite (37), constitué par une unité de commande (40), deux dispositifs d'affichage avec des écrans tactiles (41.1, 41.2) disposés à l'intérieur des deux postes de conduite de la locomotive, un module de GPS-GPRS (système de localisation sur le globe-service de radio par paquets général) (42), un portail de communication (43) avec un bus de train (44) et un bus de communication (45), qui extrait une information (46.1, ..., 46.6) à partir des onduleurs de traction (23.1, ..., 23.6), qui extrait une information (47.1, ..., 47.6) à partir d'un bloc pour mesurer des vitesses et des températures (26.1, ..., 26.6), qui extrait des signaux (48) à partir d'un découpeur de freinage (24), qui génère des ordres (49.1, ..., 49.6) transmis aux onduleurs de traction (23.1, ..., 23.6) et des ordres (50, 51 et 52) transmis au découpeur de freinage (24), un ordinateur de moteur diesel (36) et un redresseur de tension (38).
